(19) Europäisches Patentamt
European Patent Office
Office européen des brevets

(11) **EP 2 081 871 B1**

(12) **FASCICULE DE BREVET EUROPEEN**

(45) Date de publication et mention de la délivrance du brevet:
**03.05.2017 Bulletin 2017/18**

(21) Numéro de dépôt: **07820926.9**

(22) Date de dépôt: **04.10.2007**

(51) Int Cl.:
*C01F 17/00* (2006.01)   *C09G 1/02* (2006.01)
*C09K 3/14* (2006.01)

(86) Numéro de dépôt international:
**PCT/EP2007/060549**

(87) Numéro de publication internationale:
**WO 2008/043703 (17.04.2008 Gazette 2008/16)**

(54) **SUSPENSION LIQUIDE DE PARTICULES D'OXYDE DE CERIUM ET PROCEDE DE PREPARATION DE CELLE-CI**

FLÜSSIGE SUSPENSION VON CEROXIDPARTIKELN UND VERFAHREN ZU DEREN HERSTELLUNG

LIQUID SUSPENSION OF CERIUM OXIDE PARTICLES AND METHOD FOR PREPARING THE SAME

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **09.10.2006 FR 0608838**

(43) Date de publication de la demande:
**29.07.2009 Bulletin 2009/31**

(73) Titulaire: **Rhodia Opérations**
**93306 Aubervilliers (FR)**

(72) Inventeur: **CRINIERE, Guillaume**
**93210 La Plaine Saint-Denis (FR)**

(74) Mandataire: **Senninger, Thierry et al**
**Rhodia Operations**
**Département Brevets**
**Bureau 0.121**
**40, rue de la Haie Coq**
**93306 Aubervilliers Cedex (FR)**

(56) Documents cités:
**EP-A- 0 875 547      EP-A- 1 201 725**
**EP-A1- 0 298 808     EP-A2- 0 947 469**
**DE-A1- 10 251 029    US-A- 5 466 428**
**US-A- 5 938 837**

• CHEN H I ET AL: "Synthesis of nanocrystalline cerium oxide particles by the precipitation method" CERAMICS INTERNATIONAL, CERAMURGICA, FAENZA, IT, vol. 31, no. 6, 2005, pages 795-802, XP004933468 ISSN: 0272-8842

**Description**

La présente invention concerne une suspension liquide de particules d'oxyde de cérium, un procédé de préparation de celle-ci et son utilisation dans le polissage notamment.

Le développement de l'industrie de l'électronique nécessite l'utilisation de plus en plus importante de compositions pour le polissage de diverses pièces comme les disques ou les composés diélectriques. Ces compositions se présentent sous la forme de suspensions et elles doivent répondre à un certain nombre de caractéristiques. Par exemple, elles doivent offrir un taux d'enlèvement de matière élevé qui traduit leur capacité abrasive. Elles doivent aussi présenter une défectivité la plus basse possible, on entend par défectivité notamment le taux de rayures que présente le substrat une fois traité par la composition.

Pour des raisons de stabilité et de facilité d'utilisation, ces suspensions doivent être constituées de particules de dimension submicronique, c'est à dire généralement inférieure à 300 nm. En outre, la présence de particules trop fines dans ces suspensions diminue leurs capacités abrasives. Par ailleurs, des particules trop grosses peuvent contribuer à une augmentation de la défectivité. On a donc besoin de suspensions dont les particules soient monodisperses. Il faut en outre noter que pour obtenir des performances optimales cette monodispersité doit s'appliquer à la fois aux particules primaires et aux particules secondaires, c'est-à-dire les agrégats constitués par les particules primaires.

On comprend donc que la mise au point de ces suspensions est un problème complexe.

EP 1201725 et EP 0947469 décrivent une composition abrasive à base d'oxyde de cérium mais ils ne décrivent pas l'amélioration de la monodispersité des particules primaires. EP 0875547 décrit une suspension d'oxyde de cérium mais il n'est pas fait mention de l'obtention de particules primaires de taille convenable et monodisperses. US 5,466,428 ne décrit pas non plus des particules primaires monodisperses.

L'objet de l'invention est de fournir des suspensions répondant aux conditions décrites ci-dessus, c'est-à-dire des suspensions dont les particules sont monodisperses.

Dans ce but, la suspension de l'invention est une suspension de particules d'oxyde de cérium dans une phase liquide, et elle est caractérisée en ce que ces particules (particules secondaires) présentent une taille moyenne d'au plus 200 nm, ces particules secondaires étant constituées de particules primaires dont les tailles présentent une valeur moyenne d'au plus 100 nm avec un écart type dont la valeur est d'au plus 30% de la valeur de ladite taille moyenne.

D'autres caractéristiques, détails et avantages de l'invention apparaîtront encore plus complètement à la lecture de la description qui va suivre, des divers exemples concrets mais non limitatifs destinés à l'illustrer ainsi que du dessin annexé dans lequel :

- la figure 1 est une photographie obtenue par microscopie à transmission électronique d'un produit selon l'invention;
- la figure 2 est une photographie obtenue par microscopie à transmission électronique d'un autre produit selon l'invention;
- la figure 3 est une photographie obtenue par microscopie à transmission électronique d'un troisième produit selon l'invention.

Pour la suite de la description, l'expression « suspension de particules d'oxyde de cérium » désigne un système constitué de fines particules solides de dimension submicronique à base de cet oxyde, dispersées de manière stable dans une phase liquide, lesdites particules pouvant éventuellement, en outre, contenir des quantités résiduelles d'ions liés ou adsorbés tels que par exemple des nitrates ou des ammoniums.

Toujours pour la suite de la description, on entend par surface spécifique, la surface spécifique B.E.T. déterminée par adsorption d'azote conformément à la norme ASTM D 3663-78 établie à partir de la méthode BRUNAUER - EMMETT- TELLER décrite dans le périodique "The Journal of the American Chemical Society, 60, 309 (1938)".

Les particules de la suspension sont à base d'oxyde de cérium qui est généralement de l'oxyde cérique cristallisé.

Les particules qui constituent la suspension de l'invention et qui présentent une taille moyenne d'au plus 200 nm sont appelées dans la suite de la description « particules secondaires ». Ces particules sont des agrégats d'autres particules plus fines, agrégées, appelées par la suite « particules primaires ».

Selon une caractéristique importante de l'invention, ces particules primaires sont fines et monodisperses. Elles présentent en effet une taille moyenne d'au plus 100 nm avec un écart type dont la valeur est d'au plus 30% de la valeur de la taille moyenne de ces particules primaires.

La valeur moyenne de la taille des particules primaires est déterminée par la technique de diffraction des rayons X (DRX). La valeur mesurée en DRX correspond à la taille du domaine cohérent calculé à partir de la largeur des deux raies de diffraction les plus intenses et en utilisant le modèle de Scherrer. Cette valeur peut aussi être déterminée par la mesure de la surface BET.

L'écart type mentionné dans la présente invention a le sens habituel mathématique, il s'agit de la racine carrée de la variance et il s'exprime par la formule :

$$\sigma = \sqrt{\frac{1}{n}\sum_{i=1}^{n}(x_i - \overline{x})^2}$$

n étant le nombre de particules pris en compte dans la mesure,

$x_i$ étant la taille d'une particule i

$\bar{x}$ étant la valeur moyenne de la taille des particules $(1/n\sum_i x_i)$

La mesure de la taille des n différentes particules est faite à partir d'un cliché obtenu par microscopie électronique à transmission (MET).

Cet écart type peut être de préférence d'au plus 20%, plus particulièrement d'au plus 15% et encore plus particulièrement d'au plus 10% de la valeur de la taille moyenne des particules primaires.

Les particules primaires peuvent plus particulièrement avoir des tailles qui présentent une valeur moyenne d'au plus 80 nm, encore plus particulièrement d'au plus 60 nm.

Ces tailles moyennes de particules primaires peuvent être par ailleurs d'au moins 10 nm, notamment d'au moins 20 nm et plus particulièrement d'au moins 30 nm. Selon des modes de réalisation particuliers, ces tailles moyennes peuvent ainsi être comprises entre 10 nm et 100 nm, 20 nm et 80 nm, 20 nm et 30 nm et 30 nm et 60 nm.

Comme indiqué plus haut, ces particules primaires forment des agrégats qui constituent ainsi les particules secondaires. Ces particules secondaires peuvent avoir plus particulièrement une taille moyenne d'au plus 150 nm, plus particulièrement d'au plus 120 nm et encore plus particulièrement d'au plus 100 nm.

Par ailleurs, selon une autre caractéristique avantageuse de l'invention, ces particules secondaires sont elles aussi monodisperses. Elles peuvent présenter en effet un indice de dispersion d'au plus 0,5. Cet indice peut être notamment d'au plus 0,4, plus particulièrement d'au plus 0,3 et encore plus particulièrement d'au plus 0,2..

Pour l'ensemble de la description concernant les particules secondaires, la taille moyenne et l'indice de dispersion sont les valeurs obtenues en mettant en oeuvre la technique de diffraction laser en utilisant un granulomètre laser (répartition en masse).

On entend par indice de dispersion le rapport :

$$\sigma/m = (d_{90}-d_{10})/2d_{50}$$

dans lequel :

- $d_{90}$ est la taille ou diamètre des particules pour lequel 90% des particules ont un diamètre inférieur à $d_{90}$;
- $d_{10}$ est la taille ou diamètre des particules pour lequel 10% des particules ont un diamètre inférieur à $d_{10}$;
- $d_{50}$ est la taille ou diamètre moyen des particules.

La phase liquide des suspensions selon l'invention peut être de différente nature. Ce peut être tout d'abord l'eau. Ce peut être aussi un mélange eau/solvant miscible à l'eau. On peut citer comme exemple de solvant de ce type, les alcools comme le méthanol ou l'éthanol, les glycols comme l'éthylène glycol, les dérivés acétates des glycols comme le monoacétate d'éthylène glycol ou les polyols. La phase liquide peut enfin être constituée par un solvant organique. Comme exemple de solvant organique, on peut citer les hydrocarbures aliphatiques comme l'hexane, l'heptane, l'octane, le nonane, les hydrocarbures cycloaliphatiques inertes tels que le cyclohexane, le cyclopentane, le cycloheptane, les hydrocarbures aromatiques tels que le benzène, le toluène, l'éthylbenzène, les xylènes, les naphtènes liquides. Conviennent également les coupes pétrolières du type Isopar ou Solvesso (marques déposées par la Société EXXON), notamment Solvesso 100 qui contient essentiellement un mélange de méthyléthyl- et triméthyl-benzène, le Solvesso 150 qui renferme un mélange d'alcoylbenzènes en particulier de diméthylbenzène et de tétraméthylbenzène et l'Isopar qui contient essentiellement des hydrocarbures iso- et cyclo-paraffiniques en C-11 et C-12. On peut aussi citer, comme autres coupes pétrolières, celles de type Petrolink® de la société Petrolink ou de type Isane® de la société Total.

On peut mettre en oeuvre également comme solvant organique des hydrocarbures chlorés tels que le chloro- ou le dichloro-benzène, le chlorotoluène. Les éthers ainsi que les cétones aliphatiques et cycloaliphatiques comme par exemple l'éther de diisopropyle, l'éther de dibutyle, la méthyléthylcétone, la méthylisobutylcétone, la diisobutylcétone, l'oxyde de mésityle, peuvent être envisagés.

Des esters peuvent être utilisés comme ceux issus de la réaction d'acides avec des alcools en C1 à C8 et notamment les palmitates d'alcools secondaires tel l'isopropanol. On peut mentionner l'acétate de butyle à titre d'exemple.

Bien entendu, la phase liquide peut être à base d'un mélange de deux ou plusieurs hydrocarbures ou composés du type décrit ci-dessus.

Les suspensions de l'invention présentent une teneur globale en oxyde, c'est-à-dire en oxyde de cérium qui peut varier dans de larges limites et qui peut être par exemple d'au plus 40%, notamment d'au plus 25% à 30% en masse d'oxyde.

De même, le pH de ces suspensions peut être compris dans une large gamme. Ainsi, le pH des suspensions issues des procédés de préparation qui seront décrits plus loin est généralement compris entre 2 et 6, plus particulièrement entre 2 et 5, les suspensions restant stables, au sens donné ci-dessous, dans cette gamme de pH. Toutefois, la stabilité peut être améliorée soit à l'intérieur de ces gammes de pH soit au-delà de la valeur de 5 ou de 6 d'une manière connue, par addition à la suspension de composés comme des polymères ou molécules anioniques ou zwitterionic. Comme composés de ce type on peut citer ceux obtenu par la polymérisation d'au moins un monomère choisi parmi les entités suivantes: un acide ou un anhydride monocarboxylique ou polycarboxylique, linéaire ou ramifié, aliphatique, cyclique ou aromatique, à insaturation éthylénique. A titre d'exemple on peut citer l'acide polyacrylique ou l'acide citrique.

On notera enfin que les suspensions de l'invention sont stables. On entend par là que l'on n'observe pas sur ces suspensions de formation d'un gâteau de décantation avant plusieurs jours, par exemple au moins 8 jours. De plus le gâteau de décantation, s'il se forme, peut être remis en suspension par simple agitation.Le procédé de préparation des suspensions de l'invention va maintenant être décrit. La suspension de l'invention peut être préparée par un procédé qui comprend les étapes suivantes :

- (a) on prépare une solution d'un sel de cérium III qui comprend en outre du cérium IV;
- (b) on met en contact sous atmosphère inerte cette solution avec une base ce par quoi on obtient un précipité;
- (c) on soumet le milieu obtenu à l'étape précédente à un traitement thermique sous atmosphère inerte, au moins une des étapes (a), (b) ou (c) étant conduite en présence d'ions nitrates;
- (d) on effectue successivement mais dans un ordre quelconque une acidification et un lavage du milieu ainsi obtenu ce par quoi on obtient la suspension.

La première étape (a) du procédé ci-dessus consiste donc à préparer une solution de départ qui est une solution d'un sel de cérium III. Comme sels de cérium III, on peut utiliser plus particulièrement le nitrate, le chlorure, le sulfate ou le carbonate de cérium III ainsi que des mélanges de ces sels comme des mixtes nitrate/chlorure. D'une manière connue cette solution de départ doit présenter l'acidité convenable pour que le cérium soit bien entièrement présent en solution.

La solution de départ comprend en outre du cérium IV. Le cérium IV est apporté par un sel. Ce peut être par exemple le nitrate de cérium IV. Généralement, la quantité de cérium IV est telle que le rapport molaire (CeIV/CeIII) dans la solution de départ soit compris entre 1/5.000 et 1/50, plus particulièrement entre 1/2.000 et 1/50.

La solution de départ préparée à l'étape (a) peut être préalablement dégazée par bullage d'un gaz inerte. Par « gaz inerte » ou « atmosphère inerte », on entend pour la présente description une atmosphère ou un gaz exempt d'oxygène, le gaz pouvant être par exemple de l'azote ou de l'argon.

La seconde étape (b) du procédé consiste à faire réagir la solution de départ avec une base.

Comme base, on peut utiliser notamment les produits du type hydroxyde. On peut citer les hydroxydes d'alcalins ou d'alcalino-terreux et l'ammoniaque. On peut aussi utiliser les amines secondaires, tertiaires ou quaternaires. Toutefois, les amines et l'ammoniaque peuvent être préférés dans la mesure où ils diminuent les risques de pollution par les cations alcalins ou alcalino terreux. La base peut aussi être préalablement dégazée par bullage d'un gaz inerte.

Pour conduire la réaction de la seconde étape du procédé, la mise en contact peut se faire dans un ordre quelconque d'introduction des réactifs. Toutefois, il est préférable d'introduire la solution de départ dans un milieu contenant la base. Cette seconde étape doit être conduite sous atmosphère inerte, soit dans un réacteur fermé soit dans un réacteur semi-fermé avec balayage par le gaz inerte. La mise en contact se fait généralement dans un réacteur agité. Enfin, cette seconde étape est généralement effectuée à température ambiante (20°C-25°C) ou à une température d'au plus 50°C.

La troisième étape (c) du procédé est un traitement thermique du milieu réactionnel obtenu à l'issue de l'étape précédente. Ce traitement consiste à chauffer le milieu et à le maintenir à une température qui est généralement d'au plus 95°C et plus particulièrement comprise entre 60°C et 95°C.

La durée de ce traitement peut être comprise entre quelques minutes et quelques heures. Ce traitement est effectué aussi sous atmosphère inerte, ce qui a été décrit au sujet de cette atmosphère pour la seconde étape s'appliquant de même ici. De même le traitement se fait dans un réacteur agité.

Selon une caractéristique du procédé de l'invention, au moins une des étapes (a), (b) ou (c) doit être conduite en présence d'ions nitrates. Généralement, les ions nitrates sont apportés par addition d'acide nitrique, plus particulièrement à l'étape (a), lors de la préparation de la solution de cérium III. La quantité d'ions nitrates, exprimée par le rapport molaire $NO_3^-/Ce^{3+}$ est généralement comprise entre 1/3 et 5.

La dernière étape du procédé, étape (d), comprend en fait deux opérations successives qui peuvent être effectuées dans un ordre quelconque. Ces opérations sont d'une part une acidification et d'autre part un lavage.

On va décrire ci-dessous plus précisément ces opérations dans le cas d'un enchaînement acidification puis lavage. L'acidification a lieu généralement après refroidissement du milieu obtenu à l'issue de l'étape (c) par addition d'un acide. On peut utiliser tout acide minéral ou organique. On utilise plus particulièrement l'acide nitrique. La quantité d'acide ajoutée est telle que le pH du milieu après acidification soit compris entre 2 et 5.

Cette opération peut être conduite à l'air, il n'est plus nécessaire d'opérer sous atmosphère inerte à ce stade du procédé. L'acidification est suivie d'un lavage qui a pour but d'éliminer de la suspension les espèces solubles, essentiellement des sels.

Le lavage peut se faire de différentes manières avec ou sans séparation solide/liquide. On peut ainsi l'effectuer en séparant les particules solides de la phase liquide par exemple par filtration frontale, décantation ou centrifugation. Le solide obtenu est remis ensuite en suspension dans une phase aqueuse. On peut aussi procéder par filtration tangentielle. Ce lavage peut être éventuellement renouvelé si nécessaire par exemple jusqu'à l'obtention d'une conductivité donnée de la suspension, la conductivité mesurant le taux d'impuretés présentes dans cette suspension.

Comme indiqué plus haut, l'ordre des opérations peut être inversé par rapport à ce qui vient d'être décrit. Ainsi, à l'issue de l'étape (c) et, là aussi, généralement après refroidissement du milieu obtenu, on peut alors procéder à un lavage de la manière décrite ci-dessus. A l'issue du lavage, on effectue ensuite l'acidification du milieu obtenu.

A l'issue des étapes qui viennent d'être décrites il est possible de traiter la suspension obtenue dans un appareil de désagglomération de type connu par exemple un appareil de traitement par ultra sons, de traitement par jet double impact ou un appareil de broyage humide.

On obtient à l'issue de l'étape (d) une suspension selon l'invention.

Dans le cas d'une suspension partiellement ou totalement en milieu solvant organique différent de l'eau, cette suspension peut être préparée d'une manière connue en soi à partir d'une suspension aqueuse telle qu'obtenue par le procédé qui vient d'être décrit et par mise en contact avec le solvant organique.

A ce stade, il peut être avantageux d'ajouter dans la phase organique un agent promoteur dont la fonction est d'accélérer le transfert des particules de la phase aqueuse à la phase organique et d'améliorer la stabilité des suspensions organiques obtenues.

A titre d'agent promoteur, on peut utiliser les composés à fonction alcool et tout particulièrement des alcools aliphatiques linéaires ou ramifiés ayant de 6 à 12 atomes de carbone. Comme exemples spécifiques, on peut citer l'éthyl-2 hexanol, le décanol, le dodécanol ou leurs mélanges.

La mise en contact peut se faire à température ambiante par exemple environ 20°C, mais aussi à une température plus élevée, par exemple dans un intervalle allant de 60°C à 150°C.

La séparation entre les phases aqueuse et organique se fait par exemple par distillation, par décantation ou centrifugation en fonction de la nature du solvant organique.

A partir de la suspension selon l'invention, il est possible d'obtenir une poudre redispersible de particules d'oxyde de cérium par séchage puis calcination à une température qui peut être par exemple d'au plus 300°C et notamment comprise entre 100°C et 200°C, sur une durée qui peut varier entre quelques minutes et quelques heures. Cette poudre a pour caractéristique le fait qu'après introduction dans une phase liquide et redispersion dans une phase liquide elle conduit à une suspension selon l'invention telle que décrite plus haut. La redispersion se fait par simple agitation de la poudre dans la phase liquide.

La poudre est donc obtenue à partir d'une suspension selon l'invention par séchage puis calcination à une température qui peut être par exemple d'au plus 300°C et notamment comprise entre 100°C et 200°C, sur une durée qui peut varier entre quelques minutes et quelques heures.

L'invention concerne encore une suspension pour polissage comprenant soit une suspension telle que décrite plus haut, soit une suspension telle qu'obtenue par les procédés décrits précédemment. Cette suspension peut être utilisée au polissage du verre, par exemple dans l'industrie de la cristallerie, de la glacerie, du verre plat, des écrans de télévision, des lunettes, ou encore au polissage des matières céramiques ou autres matériaux de type vitreux. Cette suspension peut aussi être utilisée tout particulièrement pour le polissage de type CMP dans l'industrie de l'électronique et donc pour le polissage des substrats métalliques entrant dans la constitution des microprocesseurs mais aussi pour le polissage des couches isolantes de ces mêmes microprocesseurs, la suspension de l'invention étant particulièrement adaptée au polissage de celles-ci. Ces couches sont généralement en silice (silice dopée, silice poreuse).

Généralement, de tels suspensions comprennent, outre le composé à propriété abrasive comme les particules d'oxyde de cérium, des additifs comme un dispersant ou un oxydant.

Comme autres applications des suspensions de l'invention, on peut citer la catalyse notamment pour post combustion automobile, dans ce cas les suspensions sont utilisées dans la préparation de catalyseurs. Les suspensions peuvent aussi être mises en oeuvre pour leurs propriétés anti-UV par exemple dans la préparation de films de polymères (du type acrylique ou polycarbonate par exemple), de peintures, de papiers ou de compositions cosmétiques notamment dans la préparation de crèmes anti-UV.

Des exemples vont maintenant être donnés.

### EXEMPLE 1 COMPARATIF

Une solution de nitrate de cérium diluée est préparée par addition de 380,8 g d'une solution de nitrate de cérium trivalent 2,88 M, de 163,0 mg d'une solution de $H_2O_2$ 110V et de 877,9 g d'eau permutée. Cette solution, de rapport molaire $H_2O_2/Ce$ de 1/450, est chargée dans un réservoir semi-fermé puis dégazée sous vive agitation et sous bullage d'azote pendant 2 heures.

Une solution d'ammoniaque diluée est préparée par ajout de 839,5 g d'eau permutée et d'une solution de 233,2 g d'ammoniaque à 28%. Cette solution est chargée dans un réacteur double enveloppe de 2L semi fermé puis mise sous agitation (agitateur à quatre pales inclinées à 300t/min.) et sous bullage d'azote pendant 2 heures.

La solution de nitrate de cérium diluée est ensuite ajoutée à température ambiante dans la solution d'ammoniaque diluée en 30 min. sous la même agitation et sous balayage d'azote.

Le mélange réactionnel est ensuite monté en température à 80°C en 3/4 d'heure environ puis maintenu à cette température pendant 4h toujours sous la même agitation et sous balayage d'azote.

A l'issue de ce traitement thermique, le mélange réactionnel est laissé à refroidir puis il est acidifié à pH de 2 par ajout d'acide nitrique 68%. Le balayage d'azote est arrêté et la suspension finalement lavée par centrifugation, élimination des eaux de centrifugation et remise en suspension du gateau dans l'eau permutée. Plusieurs cycles de lavage par centrifugation sont effectués jusqu'à l'obtention d'une conductivité inférieure à 0,5 mS/cm.

La suspension finalement obtenue est ajustée à 10% poids en $CeO_2$.

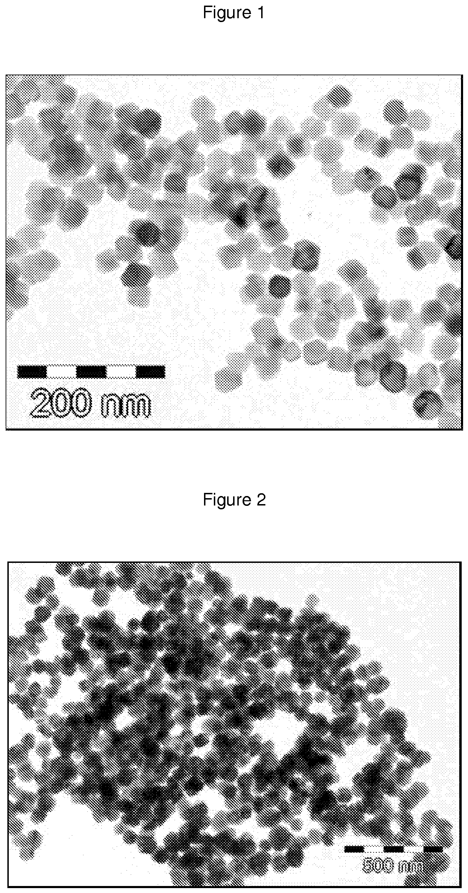

La suspension est observée en MET. On constate bien que les particules primaires sont bien monodisperses et de taille centrée autour de 35 nm. Sur une photo d'environ 150 particules (figure 1) représentatives de la suspension, on dénombre et on mesure chacune des particules, ce par quoi on obtient une taille moyenne de 33 nm avec un écart type de 3,9 nm soit 12% de la valeur de la taille moyenne.

Une partie de la suspension est séchée à l'étuve à 200°C, ce qui permet l'obtention d'une poudre de $CeO_2$ pour l'analyse DRX. Le diffractogramme X de cette poudre a la signature de $CeO_2$ cristallisé (fiche ASTM 34-394). La taille moyenne de la zone de cohérence calculée à partir de la largeur à mi-hauteur des pics de diffraction situés à $2\theta = 28,6°$, $47,5°$ et $56,4°$ par application du modèle de Scherrer donne 40 nm. La surface spécifique BET déterminée par adsorption d'azote est de 23,5 $m^2/g$, ce qui donne une taille moyenne des particules primaires de 35nm.

La taille des particules secondaires est mesurée à partir d'un granulomètre laser de type Horiba LA910 en considérant une valeur de l'indice optique de $CeO_2$ dans eau de 1,7. La taille médiane $d_{50}$ est de 102 nm. L'indice de dispersion $\sigma/m$ calculé à partir des valeurs $d_{10}$, $d_{50}$ et $d_{90}$ respectivement de 81, 102 et 128 nm est de 0,23.

EXEMPLE 2

Une solution de nitrate de cérium diluée est préparée par addition de 6,4 kg d'une solution de nitrate de cérium trivalent 2,88 M (d=1,715), de 1,0 kg d'une solution de $HNO_3$ 68%, de 4,8 kg d'eau permutée et de 8,87 g de nitrate de cérium tétravalent 1,39 M (d=1,440). Cette solution, de rapport molaire $Ce^{4+}/Ce_{total}$ de 1/1250, est chargée dans un réservoir semi-fermé puis dégazée sous vive agitation et sous bullage d'azote pendant 2 heures.

Une solution d'ammoniaque diluée est préparée par ajout de 22,6 kg d'eau permutée et d'une solution de 4,6 kg d'ammoniaque à 28%. Cette solution est chargée dans un réacteur double enveloppe de 40L semi fermé puis mise sous agitation (agitateur à quatre pales inclinées à 400t/min.) et sous bullage d'azote pendant 2 heures.

La solution de nitrate de cérium diluée est ensuite ajoutée à température ambiante dans la solution d'ammoniaque diluée en 30 min. sous la même agitation et sous balayage d'azote.

Le mélange réactionnel est ensuite monté en température à 83°C en 3/4 d'heure environ puis maintenu à cette température pendant 4h toujours sous la même agitation et sous balayage d'azote.

A l'issue de ce traitement thermique, le mélange réactionnel est laissé à refroidir puis il est acidifié à pH de 2 par ajout d'acide nitrique 68%. Le balayage d'azote est arrêté et la suspension finalement lavée par centrifugation, élimination des eaux de centrifugation et remise en suspension du gateau dans l'eau permutée. Plusieurs cycles de lavage par centrifugation sont effectués jusqu'à l'obtention d'une suspension finalement ajustée à 10% poids en $CeO_2$ ayant un pH de 3,2 et une conductivité ionique de 0,38 mS/cm.

La suspension est observée en MET. On constate que les particules primaires sont bien monodisperses et de taille centrée autour de 60 nm. Sur une photo de plusieurs centaines de particules (figure 2) représentatives de la suspension, on dénombre et on mesure chacune des particules, ce par quoi on obtient une taille moyenne de 65 nm avec un écart type de 5,8 nm soit 9% de la valeur de la taille moyenne.

Une partie de la suspension est séchée à l'étuve à 200°C, ce qui permet l'obtention d'une poudre de $CeO_2$ pour l'analyse DRX. Le diffractogramme X de cette poudre a la signature de $CeO_2$ cristallisé (fiche ASTM 34-394). La taille moyenne de la zone de cohérence calculée à partir de la largeur à mi-hauteur des pics de diffraction situés à $2\theta = 28,6°$, $47,5°$ et $56,4°$ par application du modèle de Scherrer donne 70 nm. La surface spécifique BET déterminée par adsorption d'azote est de 13,0 $m^2/g$, ce qui donne une taille moyenne des particules primaires de 64 nm.

La taille des particules secondaires est mesurée à partir d'un granulomètre laser de type Horiba LA910 en considérant une valeur de l'indice optique de $CeO_2$ dans eau de 1,7. La taille médiane $d_{50}$ est de 112 nm. L'indice de dispersion $\sigma/m$ calculé à partir des valeurs $d_{10}$, $d_{50}$ et $d_{90}$ respectivement de 84, 112 et 157nm est de 0,32.

EXEMPLE 3

Une suspension d'oxyde de cérium est préparée selon le même procédé que dans l'exemple 2 mais avec un rapport molaire $Ce^{4+}/Ce_{total}$ dans la solution de nitrate de cérium diluée de 1/1000 au lieu de 1/1250.

La suspension est caractérisée par une concentration de 10% poids en $CeO_2$ ayant un pH de 3,5 et une conductivité ionique de 0,18 mS/cm. La taille moyenne de la zone de cohérence calculée à partir de la largeur à mi-hauteur des pics de diffraction situés à $2\theta = 28,6°$, $47,5°$ et $56,4°$ par application du modèle de Scherrer donne 54 nm. La surface spécifique BET déterminée par adsorption d'azote est de 19,0 m$^2$/g, ce qui donne une taille moyenne des particules primaires de 44 nm. La taille des particules secondaires est mesurée à partir d'un granulomètre laser de type Horiba LA910 en considérant une valeur de l'indice optique de CeO$_2$ dans eau de 1,7. La taille médiane d$_{50}$ est de 110 nm. L'indice de dispersion σ/m calculé à partir des valeurs d$_{10}$, d$_{50}$ et d$_{90}$ respectivement de 85, 110 et 147 nm est de 0,28.

La suspension est séchée 1 nuit à 100°C puis 4 heures à 200°C ce qui permet l'obtention d'une poudre.

Cette poudre est redispersée dans l'eau permutée. La suspension ainsi obtenue est caractérisée par une concentration de 10% poids en CeO$_2$, un pH de 3,5 et une conductivité ionique de 0,21 mS/cm. La taille des particules secondaires est mesurée à partir d'un granulomètre laser de type Horiba LA910 en considérant une valeur de l'indice optique de CeO$_2$ dans eau de 1,7. La taille médiane d$_{50}$ est de 93 nm. L'indice de dispersion σ/m calculé à partir des valeurs d$_{10}$, d$_{50}$ et d$_{90}$ respectivement de 76, 93 et 116 nm est de 0,21.

EXEMPLE 4

Une solution de nitrate de cérium est préparée par addition de 13,84 kg d'une solution de nitrate de cérium trivalent 2,88 M (d=1,715), de 2,45 kg d'une solution de HNO$_3$ 60% et de 16,4 g de nitrate de cérium tétravalent 1,35 M (d=1,43). Cette solution, de rapport molaire Ce$^{4+}$/Ce$_{total}$ de 1/1500, est chargée dans un réservoir semi-fermé puis dégazée sous vive agitation et sous bullage d'azote.

Une solution d'ammoniaque diluée est préparée par ajout de 79,82 kg d'eau permutée et d'une solution de 9,25 kg d'ammoniaque à 25,7%. Cette solution est chargée dans un réacteur double enveloppe de 100L semi fermé puis mise sous agitation (agitateur type impeller à 130 t/min.) et sous bullage d'azote.

La solution de nitrate de cérium est ensuite ajoutée à température ambiante dans la solution d'ammoniaque diluée en 30 min. sous la même agitation et sous balayage d'azote.

Le mélange réactionnel est ensuite monté en température à 80°C en 1 heure environ puis maintenu à cette température pendant 4h toujours sous la même agitation et sous balayage d'azote.

A l'issue de ce traitement thermique, le mélange réactionnel est laissé à refroidir puis il est acidifié à pH de 2 par ajout d'acide nitrique 68%. Le balayage d'azote est arrêté et une fraction de la suspension finalement lavée par centrifugation, élimination des eaux de centrifugation et remise en suspension du gâteau dans l'eau permutée. Plusieurs cycles de lavage par centrifugation sont effectués jusqu'à l'obtention de 3,0 kg d'une suspension ajustée à 10% poids en CeO$_2$ ayant un pH de 4,8 et une conductivité ionique de 0,1 mS/cm. Une partie de la suspension (avant ajout d'acide polyacrylique (PAA)) est séchée à l'étuve à 200°C, ce qui permet l'obtention d'une poudre de CeO$_2$. La surface spécifique BET déterminée par adsorption d'azote est de 13,8 m$^2$/g, ce qui donne une taille moyenne des particules primaires de 60 nm.

Cette suspension est ajoutée en 15 min. sous vive agitation dans 3,0 kg d'une solution de PAA de masse molaire Mw=1800 g/mol, préalablement préparée par dilution dans l'eau permutée de 6 g de poudre de PAA. Après 15 min. d'agitation supplémentaire, le mélange réactionnel est centrifugé et le surnageant est éliminé. Le gâteau ainsi obtenu est remis en suspension dans l'eau permutée et remonté en pH par ajout d'une solution d'ammoniaque 28%, ce qui conduit à une suspension de CeO$_2$ à 10% poids en CeO$_2$ ayant un pH de 8,0.

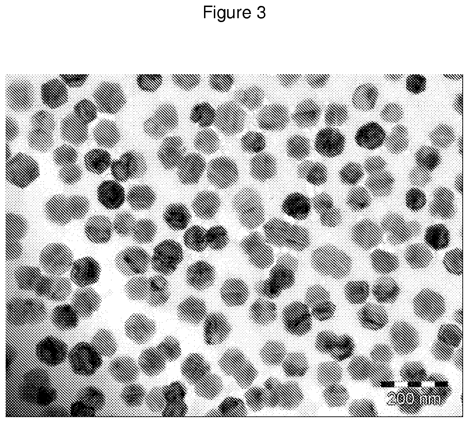

La suspension est observée en MET. On constate que les particules primaires sont bien monodisperses et de taille centrée autour de 60 nm. Sur une photo d'environ 150 particules (figure 3) représentatives de la suspension, on dénombre et on mesure chacune des particules, ce par quoi on obtient une taille moyenne de 66 nm avec un écart type de 9,2 nm, ce qui représente 14% de la valeur de la taille moyenne.

La taille des particules secondaires est mesurée à partir d'un granulomètre laser de type Horiba LA910 en considérant une valeur de l'indice optique de CeO$_2$ dans eau de 1,7. La taille médiane d$_{50}$ est de 97 nm. L'indice de dispersion σ/m calculé à partir des valeurs d$_{10}$, d$_{50}$ et d$_{90}$ respectivement de 80, 97 et 115 nm est de 0,18.

EXEMPLE 5 COMPARATIF

Une solution de nitrate de cérium est préparée par addition de 830,9 g d'une solution de nitrate de cérium trivalent 2,88 M (d=1,715) et de 129,5 g d'une solution de HNO$_3$ 68%. Cette solution ne contient donc ni H$_2$O$_2$, ni Ce$^{4+}$. Elle est chargée dans un réservoir semi-fermé puis dégazée sous vive agitation et sous bullage d'azote.

Une solution d'ammoniaque diluée est préparée par ajout de 4950,2 g d'eau permutée et de 423,9 g d'une solution d'ammoniaque à 28%. Cette solution est chargée dans un réacteur double enveloppe de 6L semi fermé puis dégazée sous vive agitation et sous bullage d'azote.

La solution de nitrate de cérium est ensuite ajoutée à température ambiante dans la solution d'ammoniaque diluée en 30 min. sous agitation et sous balayage d'azote.

Le mélange réactionnel est ensuite monté en température à 80°C en 3/4 d'heure environ puis maintenu à cette température pendant 4h toujours sous balayage d'azote.

A l'issue de ce traitement thermique, le mélange réactionnel est laissé à refroidir puis il est acidifié à pH de 2 par ajout d'acide nitrique 68%. Le balayage d'azote est arrêté. On remarque que la solution obtenue est transparente ce qui montre que la synthèse n'a pas démarrée et on n'a pas obtenu de suspension selon l'invention.

**Revendications**

1. Suspension de particules d'oxyde de cérium dans une phase liquide, **caractérisée en ce que** ces particules (particules secondaires) présentent une taille moyenne d'au plus 200 nm, ces particules secondaires étant constituées de particules primaires dont les tailles présentent une valeur moyenne d'au plus 100 nm avec un écart type dont la valeur est d'au plus 30% de la valeur de ladite taille moyenne.

2. Suspension selon la revendication 1, **caractérisée en ce que** les particules primaires ont des tailles qui présentent un écart type d'au plus 20%, plus particulièrement d'au plus 15% de la valeur de la taille moyenne précitée.

3. Suspension selon la revendication 2, **caractérisée en ce que** les particules primaires ont des tailles qui présentent un écart type d'au plus 10% de la valeur de la taille moyenne précitée.

4. Suspension selon l'une des revendications précédentes, **caractérisée en ce que** les particules primaires ont des tailles qui présentent une valeur moyenne d'au plus 80 nm, plus particulièrement d'au plus 60 nm.

5. Suspension selon la revendication 4, **caractérisée en ce que** les particules primaires ont une taille qui présente une valeur moyenne d'au moins 30 nm.

6. Suspension selon l'une des revendications précédentes, **caractérisée en ce que** les particules secondaires présentent un indice de dispersion d'au plus 0,5.

7. Suspension selon la revendication 6, **caractérisée en ce que** les particules secondaires présentent un indice de dispersion d'au plus 0,4, plus particulièrement d'au plus 0,3.

8. Suspension selon la revendication 7, **caractérisée en ce que** les particules secondaires présentent un indice de dispersion d'au plus 0,2.

9. Suspension selon l'une des revendications précédentes, **caractérisée en ce que** les particules secondaires présentent une taille moyenne d'au plus 150 nm, plus particulièrement d'au plus 100 nm.

10. Suspension selon l'une des revendications précédentes, **caractérisée en ce que** les particules primaires présentent une taille moyenne d'au moins 10 nm, plus particulièrement d'au moins 20 nm.

11. Procédé de préparation d'une suspension selon l'une des revendications 1 à 9, **caractérisé en ce qu'**il comprend les étapes suivantes :

    - (a) on prépare une solution d'un sel de cérium III qui comprend en outre du cérium IV;
    - (b) on met en contact sous atmosphère inerte cette solution avec une base ce par quoi on obtient un précipité;
    - (c) on soumet le milieu obtenu à l'étape précédente à un traitement thermique sous atmosphère inerte, au moins une des étapes (a), (b) ou (c) étant conduite en présence d'ions nitrates;
    - (d) on effectue successivement mais dans un ordre quelconque une acidification et un lavage du milieu ainsi obtenu ce par quoi on obtient la suspension.

12. Procédé selon la revendication 11, **caractérisé en ce que** la solution d'un sel de cérium III de l'étape (a) contient du cérium IV dans une proportion molaire cérium IV/cérium III comprise entre 1/5.000 et 1/50, plus particulièrement entre 1/2.000 et 1/50.

13. Procédé selon la revendication 11 ou 12, **caractérisé en ce que** la teneur en ions nitrates lors de la mise en oeuvre au moins une des étapes (a), (b) ou (c) exprimée par le rapport molaire $NO_3^-/Ce^{3+}$ est comprise entre 1/3 et 5.

14. Procédé selon l'une des revendications 11 à 13, **caractérisé en ce qu'**on effectue le traitement thermique à une température d'au plus 95°C.

15. Suspension pour polissage, **caractérisée en ce qu'**elle comprend une suspension selon l'une des revendications 1 à 10, ou une suspension telle qu'obtenue par le procédé selon l'une des revendications 11 à 14.

**Patentansprüche**

1. Suspension von Ceroxidpartikeln in einer Flüssigphase, **dadurch gekennzeichnet, dass** diese Partikel (sekundäre Partikel) eine mittlere Größe von höchstens 200 nm aufweisen, wobei diese sekundären Partikel aus primären Partikeln bestehen, deren Größen einen Mittelwert von höchstens 100 nm mit einer Standardabweichung aufweisen, deren Wert höchstens 30 % des Werts der mittleren Größe beträgt.

2. Suspension nach Anspruch 1, **dadurch gekennzeichnet, dass** die primären Partikel Größen aufweisen, die eine Standardabweichung von höchstens 20 %, bevorzugter höchstens 15 %, des Werts der vorgenannten mittleren Größe haben.

3. Suspension nach Anspruch 2, **dadurch gekenn-**

zeichnet, dass die primären Partikel Größen aufweisen, die eine Standardabweichung von höchstens 10 % des Werts der vorgenannten mittleren Größe haben.

4. Suspension nach einem der vorhergehenden Ansprüche, **dadurch gekennzeichnet, dass** die primären Partikel Größen aufweisen, die einen Mittelwert von höchstens 80 nm, bevorzugter höchstens 60 nm, haben.

5. Suspension nach Anspruch 4, **dadurch gekennzeichnet, dass** die primären Partikel eine Größe aufweisen, die einen Mittelwert von höchstens 30 nm hat.

6. Suspension nach einem der vorhergehenden Ansprüche, **dadurch gekennzeichnet, dass** die sekundären Partikel einen Dispersionsindex von höchstens 0,5 aufweisen.

7. Suspension nach Anspruch 6, **dadurch gekennzeichnet, dass** die sekundären Partikel einen Dispersionsindex von höchstens 0,4, bevorzugter höchstens 0,3, aufweisen.

8. Suspension nach Anspruch 7, **dadurch gekennzeichnet, dass** die sekundären Partikel einen Dispersionsindex von höchstens 0,2 aufweisen.

9. Suspension nach einem der vorhergehenden Ansprüche, **dadurch gekennzeichnet, dass** die sekundären Partikel eine mittlere Größe von höchstens 150 nm, bevorzugter höchstens 100 nm, aufweisen.

10. Suspension nach einem der vorhergehenden Ansprüche, **dadurch gekennzeichnet, dass** die primären Partikel eine mittlere Größe von höchstens 10 nm, bevorzugter höchstens 20 nm, aufweisen.

11. Verfahren zur Herstellung einer Suspension nach einem der Ansprüche 1 bis 9, **dadurch gekennzeichnet, dass** dieses die folgenden Schritte umfasst:

- (a) Herstellen einer Lösung eines Cer(III)-Salzes, die außerdem Cer(IV) umfasst;
- (b) Inberührungbringen dieser Lösung unter einer inerten Atmosphäre mit einer Base, wobei ein Niederschlag erhalten wird;
- (c) Unterwerfen des im vorhergehenden Schritt erhaltenen Mediums einer Wärmebehandlung unter einer inerten Atmosphäre, wobei mindestens einer der Schritte (a), (b) oder (c) in Anwesenheit von Nitrationen durchgeführt wird;
- (d) Bewirken einer Ansäuerung und einer Wäsche des so erhaltenen Mediums aufeinanderfolgend, jedoch in einer beliebigen Reihenfolge, wobei die Suspension erhalten wird.

12. Verfahren nach Anspruch 11, **dadurch gekennzeichnet, dass** die Lösung eines Cer(III)-Salzes von Schritt (a) Cer(IV) in einem Molverhältnis Cer(IV)/Cer(III) zwischen 1/5.000 und 1/50, bevorzugter zwischen 1/2.000 und 1/50, enthält.

13. Verfahren nach Anspruch 11 oder 12, **dadurch gekennzeichnet, dass** der Gehalt an Nitrationen bei der Durchführung mindestens eines der Schritte (a), (b) oder (c), ausgedrückt durch das Molverhältnis $NO_3^-/Ce^{3+}$, zwischen 1/3 und 5 beträgt.

14. Verfahren nach einem der Ansprüche 11 bis 13, **dadurch gekennzeichnet, dass** die Wärmebehandlung bei einer Temperatur von höchstens 95°C durchgeführt wird.

15. Poliersuspension, **dadurch gekennzeichnet, dass** diese eine Suspension nach einem der Ansprüche 1 bis 10, oder eine Suspension, wie durch das Verfahren nach einem der Ansprüche 11 bis 14 erhalten, umfasst.

## Claims

1. Suspension of cerium oxide particles in a liquid phase, **characterized in that** these particles (secondary particles) have an average size of at most 200 nm, these secondary particles consisting of primary particles whose average size is of at most 100 nm with a standard deviation of at most 30% of the value of said average size.

2. Suspension according to Claim 1, **characterized in that** the primary particles have sizes which exhibit a standard deviation of at most 20%, more particularly at most 15% of the value of said average size.

3. Suspension according to Claim 2, **characterized in that** the primary particles have sizes which exhibit a standard deviation of at most 10% of the value of said average size.

4. Suspension according to one of the preceding claims, **characterized in that** the primary particles have sizes which exhibit an average value of at most 80 nm, more particularly of at most 60 nm.

5. Suspension according to Claim 4, **characterized in that** the primary particles have an average size of at least 30 nm.

6. Suspension according to one of the preceding claims, **characterized in that** the secondary particles have a dispersion index of at most 0.5.

7. Suspension according to Claim 6, **characterized in**

**that** the secondary particles have a dispersion index of at most 0.4, more particularly of at most 0.3.

8. Suspension according to Claim 7, **characterized in that** the secondary particles have a dispersion index of at most 0.2.

9. Suspension according to one of the preceding claims, **characterized in that** the secondary particles have an average size of at most 150 nm, more particularly of at most 100 nm.

10. Suspension according to one of the preceding claims, **characterized in that** the primary particles have an average size of at least 10 nm, more particularly of at least 20 nm.

11. Process for preparing a suspension according to one of Claims 1 to 9, **characterized in that** it comprises the following steps:

   - (a) a solution of a cerium III salt which also comprises cerium IV is prepared;
   - (b) this solution is brought into contact with a base, under an inert atmosphere, by virtue of which procedure a precipitate is obtained;
   - (c) the medium obtained in the preceding step is subjected to a thermal treatment under an inert atmosphere, at least one of steps (a), (b) or (c) being carried out in the presence of nitrate ions;
   - (d) an acidification and a washing of the medium thus obtained are carried out successively but in any order, by virtue of which procedure the suspension is obtained.

12. Process according to Claim 11, **characterized in that** the solution of a cerium III salt of step (a) contains cerium IV in a cerium IV/cerium III molar proportion of between 1/5000 and 1/50 more particularly between 1/2000 and 1/50.

13. Process according to Claim 11 or 12, **characterized in that** the content of nitrate ions during the implementation of at least one of steps (a), (b) or (c), expressed by the $NO_3^-/Ce^{3+}$ molar ratio, is between 1/3 and 5.

14. Process according to one of Claims 11 to 13, **characterized in that** the thermal treatment is carried out at a temperature of at most 95°C.

15. Suspension for polishing, **characterized in that** it comprises a suspension according to one of Claims 1 to 10, or a suspension as obtained by means of the process according to one of Claims 11 to 14.

Figure 1

Figure 2

Figure 3

## RÉFÉRENCES CITÉES DANS LA DESCRIPTION

**Documents brevets cités dans la description**

- EP 1201725 A
- EP 0947469 A
- EP 0875547 A
- US 5466428 A

**Littérature non-brevet citée dans la description**

- *The Journal of the American Chemical Society,* 1938, vol. 60, 309